# EUROPÄISCHE PATENTSCHRIFT

(11) **EP 1 236 594 B1**
(45) Veröffentlichungstag und Bekanntmachung des Hinweises auf die Patenterteilung: **25.05.2011**
(21) Anmeldenummer: 02003698.4
(22) Anmeldetag: 19.02.2002
(51) Int. Cl.: B60H 1/26

(54) **Fahrzeugdach**
Vehicle roof
Toit de véhicule

(30) Priorität: 02.03.2001 DE 10110191
(43) Veröffentlichungstag der Anmeldung: 04.09.2002
(73) Patentinhaber: Webasto AG, 82131 Stockdorf (DE)
(72) Erfinder: Schätzler, Walter, 82319 Starnberg (DE); Veccioni, Bernhard, 82131 Gauting (DE); Pfalzgraf, Manfred, 82211 Herrsching (DE); Gaillard, de Francois, Mouilleron en pareds (FR); Dittrich, Wolfgang, 82205 Gilching (DE); Rösch, Christoph, 82229 Seefeld (DE)
(74) Vertreter: Wiese, Gerhard

(56) Entgegenhaltungen:
- DE-A- 4 215 221
- DE-A- 19 834 997
- DE-C- 4 213 510
- DE-C- 4 222 508

## Beschreibung

Die vorliegende Erfindung betrifft ein Fahrzeugdach gemäß dem Oberbegriff des Patentanspruchs 1.

Aus der EP 1 020 308 A1 ist ein Fahrzeugdach bekannt, bei dem unter einem bewegbaren Deckel ein mit verstellbaren Lamellen versehener Himmel angeordnet ist. An den B-Säulen des Fahrzeugs sind Luftkanäle angeordnet, die mit oberen Auslässen in den Zwischenraum zwischen Deckel und Himmel einmünden. Je nach Stellung der Lamellen wird mehr oder weniger Luft durch den Himmel in den Passagierraum geführt. Die Luftkanäle sind im Bodenbereich des Fahrzeugs mit einem Gebläse versehen und zur Klimatisierung der Luft mit der fahrzeugeigenen Heizungs- und Klimaanlage verbunden. Die Anordnung beansprucht relativ viel Bauhöhe im Kopfbereich der Insassen und zusätzlichen Bauraum an den Seitenwänden und im Bodenbereich des Fahrzeugs.

Fahrzeugdächer mit einem transparenten Glas- oder Kunststoffdeckel sind seit langem bekannt. Üblicherweise ist dabei unterhalb des transparenten Deckels ein Abdeckelement, beispielsweise ein Schiebehimmel oder eine Rollo-Anordnung (siehe z.B. DE 195 00 367 C1), angeordnet, um es den Fahrzeuginsassen zu ermöglichen, den Lichteinfall durch den Deckel zu regulieren und insbesondere im Sommer den transparenten Deckel von unten abzudecken.

Alternativ kann die lichtdurchlässige Scheibe des transparenten Deckels so ausgestaltet sein, dass sich die Transmission durch die Scheibe hindurch einstellen lässt. Zu diesem Zweck ist es bekannt, die Scheibe beispielsweise mit einer Flüssigkristallschicht zu versehen, deren Transparenz in Abhängigkeit von der daran angelegten elektrischen Spannung steuerbar ist, siehe z.B. DE 38 17 946 A1. Ferner ist es bekannt, die transparente Scheibe mit einer elektrochromen Beschichtung zu versehen, um die Transparenz der Scheibe durch die angelegte Spannung zu steuern, siehe z.B. DE 196 30 812 A1.

Es ist Aufgabe der vorliegenden Erfindung, ein Fahrzeugdach mit einem Dachteil zu schaffen, welches mit einer transparenten Scheibe wenig Bauraum beansprucht und eine gute Klimatisierung insbesondere im Kopfbereich des Fahrzeuginnenraums erlaubt.

Diese Aufgabe wird erfindungsgemäß gelöst durch ein Fahrzeugdach, wie es in Anspruch 1 definiert ist. Bevorzugte Ausgestaltungen der Erfindung ergeben sich aus den Unteransprüchen.

Bei dieser erfindungsgemäßen Lösung ist vorteilhaft, dass dadurch, dass ein Luftstrom von der Seite über die aüsschließlich im Rahmen oder einem am Rahmen befestigten Bauteil integrierten Luftkanäle direkt auf die Scheibe geleitet wird, ein Kühlen oder Erwärmen der Scheibe ermöglicht wird, was einerseits das Beschlagen bzw. Vereisen der Scheibe und eine unangenehm heiße oder kalte Abstrahlung der Scheibe auf den Kopfbereich der Insassen verhindern kann und andererseits, insbesondere im Zusammenspiel mit einer transmissionsgesteuerten Ausgestaltung der Scheibe, den Verzicht auf einen Schiebehimmel oder Rollo erlaubt. Dabei ermöglicht die erfindungsgemäße Vorrichtung in vorteilhafter Weise eine besonders feinfühlige Klimatisierung des Fahrzeuginnenraums, so dass das Wärme- bzw. Kälteempfinden der Fahrzeuginsassen Berücksichtigung findet.

Im Folgenden wird die Erfindung anhand der beigefügten Zeichnungen beispielhaft näher erläutert. Dabei zeigt:
- FIG. 1: eine schematische perspektivische Ansicht von unten auf ein erfin- dungsgemäßes Dach bei der Montage;
- FIG. 2: eine Schnittansicht eines Luftführungskanals für ein erfindungsge- mäßes Dach;
- FIG. 3: eine schematische perspektivische Ansicht, teilweise in aufgeschnit- tener Darstellung, einer leicht abgewandelten Ausführung eines Luftführungskanals;
- FIG. 4: eine Schnittansicht durch den Luftführungskanal von FIG. 3 im mon- tierten Zustand;
- FIG. 5: eine Ansicht ähnlich zu FIG. 4, wobei jedoch eine abgewandelte Ausführungsform dargestellt ist;
- FIG. 6: eine Schnittansicht eines alternativen Luftführungskanals für ein er- findungsgemäßes Dach;
- FIG. 7: eine schematische perspektivische Ansicht, teilweise in aufgeschnit- tener Darstellung, der in Fig. 6 gezeigten Ausführung eines Luftfüh- rungskanals, und
- FIG. 8: eine schematische perspektivische Ansicht eines in einem Fahrzeug eingebauten erfindungsgemäßen Fahrzeugdachs.

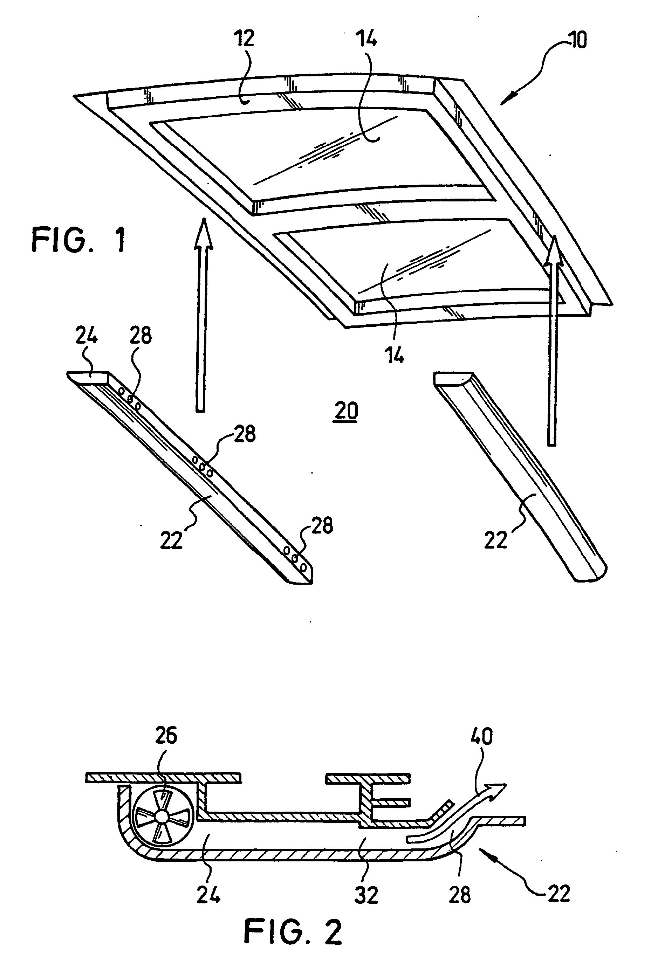

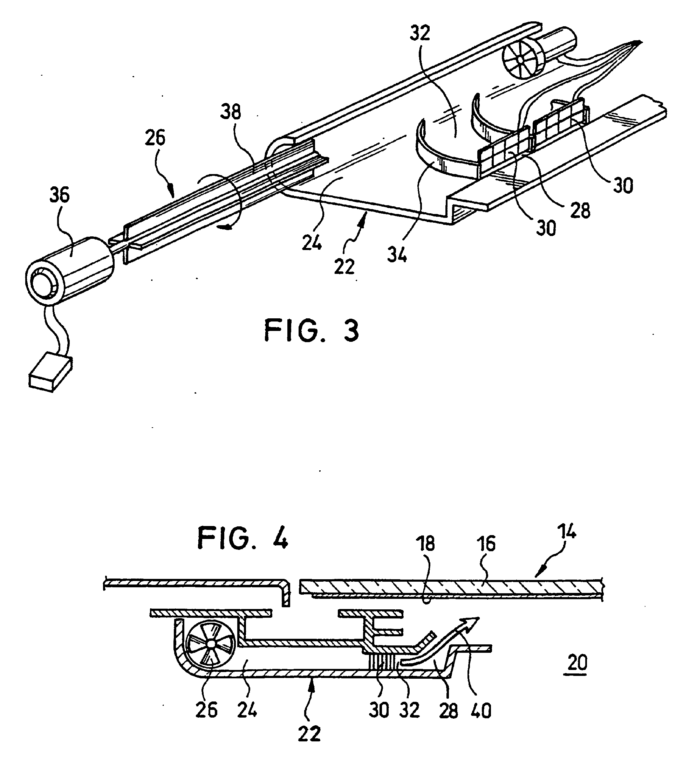

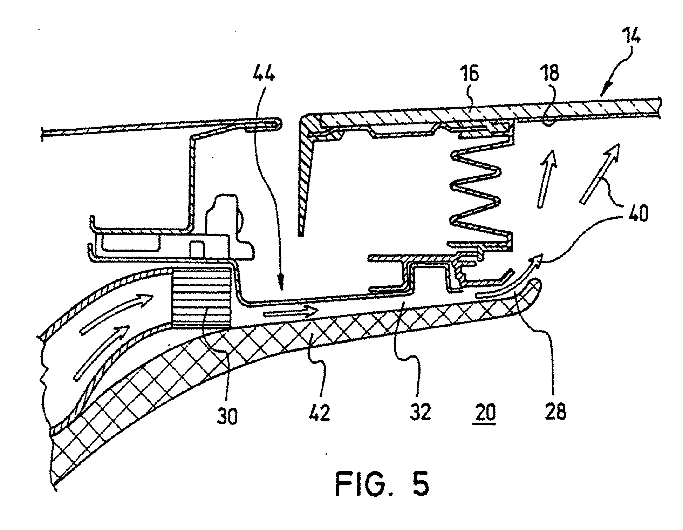

In FIG. 1 ist schematisch ein als Dachmodul 10 ausgebildetes Fahrzeugdach dargestellt, welches einen Rahmen 12 mit zwei transparenten Dachteilen 14 umfasst, die in dem Rahmen 12 fest oder mittels eines Antriebs in bekannter Weise verstellbar montiert sein können. Die als Deckel ausgebildeten Dachteile 14 umfassen dabei eine transparente Glas- oder Kunststoffscheibe 16, die in üblicher Weise in ihrem Randbereich umschäumt und mit Befestigungselementen (nicht dargestellt) versehen ist. Die Scheibe 16 ist so ausgebildet, dass die Lichttransmission in dem Fahrzeuginnenraum einstellbar ist. Zu diesem Zweck kann die Scheibe gemäß FIG. 4 und 5 mit einer Schicht 18 versehen sein, deren Transmission durch Anlegen einer Spannung einstellbar ist. Dabei kann es sich um eine mittels Beschichtung aufgebrachte Schicht oder um eine aufgeklebte Folie handeln. Die Schicht 18 kann aus elektrochromem Material oder aus Flüssigkristallmaterial bestehen, wie dies z.B. in der DE 196 30 812 A1 bzw. der

DE 42 34 981 A1 beschrieben ist. Ferner kann die Schicht 18 auch als SPD-Folie ausgebildet sein. Außerdem kann die transmissionsvariable Schicht auch im Inneren der Scheibe 16 vorgesehen sein.

Der Zweck der transmissionsvariablen Schicht 18 liegt darin, eine üblicherweise unterhalb der Scheibe 16 angeordnete mechanische Abdeckvorrichtung, wie beispielsweise einen Schiebehimmel oder eine Rolloanordnung, entbehrlich zu machen, indem die Möglichkeit geschaffen wird, bei unerwünscht starkem Lichteinfall durch entsprechende Steuerung der Transmission der Schicht 18 den Lichteinfall durch die Scheibe 16 hindurch in den Fahrzeuginnenraum 20 in gewünschter Weise zu verringern. Durch den Entfall der mechanischen Abdeckanordnung kann der Bauraumbedarf des Fahrzeugdaches erheblich verringert werden. Ferner entfällt auch die sonst vorhandene Notwendigkeit, bei öffnungsfähigen Dachteilen 14 eine entsprechende Mechanik vorzusehen, um beim Öffnen derselben die mechanische Abdeckvorrichtung ebenfalls entsprechend zu öffnen. Auf diese Weise kann auch die Anforderung an die Steuerung eines öffnungsfähigen Fahrzeugdaches verringert werden.

Gemäß FIG. 1 ist zu beiden Seiten der Dachteile 14 jeweils ein Verkleidungsteil 22 vorgesehen, welches sich in Fahrzeuglängsrichtung erstreckt und einen in Längsrichtung verlaufenden Luftführungskanal 24, einen Lüfter 26 sowie senkrecht von dem Luftführungskanal 24 abzweigende Luftauslassöffnungen 28 aufweist. Die Verkleidungsteile 22 werden vormontiert und können dann bei der Endmontage in der in FIG. 1 mit Pfeilen angedeuteten Weise am Dachmodul 10 angebracht werden.

Gemäß FIG. 3 sind die Auslassöffnungen 28 mit einem Element 30 versehen, bei welchem es sich um ein Heizelement, ein Kühlelement oder ein Element mit beiden. Funktionen handeln kann. Vorzugsweise wird dabei ein PTC-Heizelement oder ein Peltier-Kühlelement verwendet, wobei diese Elemente vorzugsweise aus dem Bordnetz gespeist werden. Bei der Ausführungsform gemäß FIG. 5 ist ein Heiz-/Kühlelement 30 ein Stück stromauf der Auslassöffnung 28 angeordnet. PTC-Elemente, wie sie bei der vorliegenden Erfindung verwendet werden können, sind beispielsweise aus der älteren deutschen Anmeldung mit dem Aktenzeichen 100 14 012 bekannt.

Stromauf der Auslassöffnungen 28 sind Auslasskanäle 32 vorgesehen, welche beispielsweise mit Leitschaufeln 34 versehen sind, um Luft von dem Luftführungskanal 24 zu der Auslassöffnung 28 zu leiten.

In dem Luftführungskanal 24 ist der Lüfter 26 angeordnet, welcher einen Elektromotor 36 und ein Lüfterrad 38 umfasst, dessen Drehachse in Längsrichtung des Luftführungskanals 24 verläuft. Pro Luftführungskanal 24 können auch mehrere Lüfter vorgesehen sein.

Bei der Ausführungsform gemäß Fig. 5 sind die Luftführungskanäle bzw. Auslasskanäle 32 mit Auslassöffnungen 28 in den Dachrahmen 44 integriert und werden wie dieser von unten durch einen Himmel 42 verdeckt.

Gemäß FIG. 4 und 5 sind die Auslassöffnungen 28 so angeordnet, dass ein mit Pfeilen angedeuteter Luftstrom 40 von unten seitlich direkt auf die Scheibe 16 geleitet wird, wobei die Luftführungskanäle im wesentlichen parallel zu dem seitlichen Scheibenrand verlaufen. Mittels der Heiz-/Kühlelemente 30 kann der Luftstrom 40 je nach Jahreszeit und Einsatzbedingung temperiert werden, d.h. er kann entweder gegenüber der Umgebungs- bzw. Fahrzeuginnenraumluft erwärmt oder gekühlt werden. Im Sommer wird dabei regelmäßig eine Kühlung erwünscht sein, um die Temperatur im Fahrzeuginnenraum im Bereich der Deckelscheibe 16 zu verringern, um ein angenehmes Fahrzeuginnenraumklima, insbesondere im Kopfbereich, zu schaffen. Im Winter dagegen wird regelmäßig eine Erwärmung der Luft wünschenswert sein, was einerseits dazu beiträgt, für eine angenehme Temperierung der Luft im Fahrzeuginnenraum im Kopfbereich nahe der Deckelscheibe 16 zu sorgen, um so die Fahrzeugheizung zu unterstützen, und andererseits eine Enteisung der Deckelscheibe bzw. eine Verringerung des Beschlagens der Deckelscheibe 16 zu erreichen.

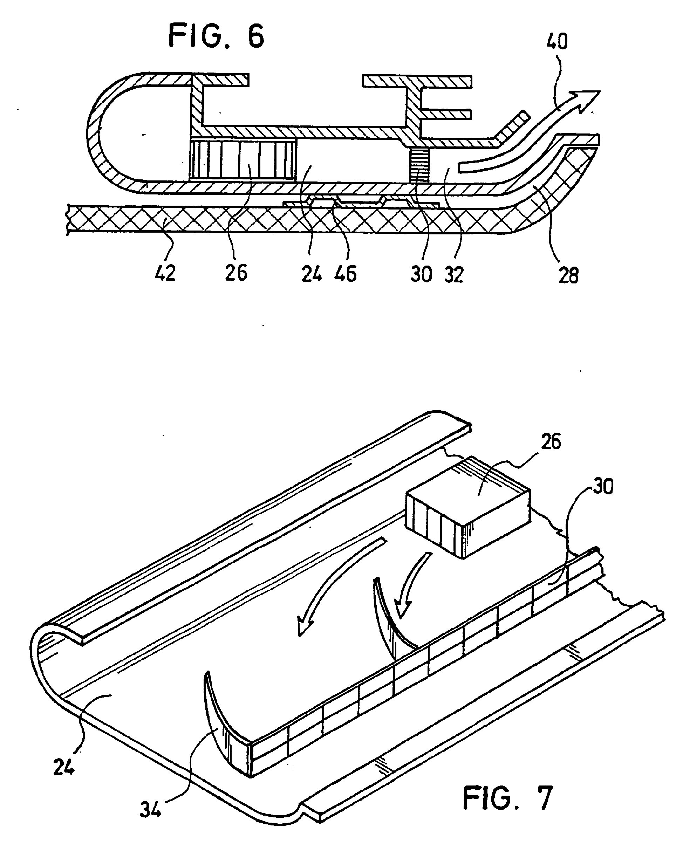

In der Fig. 6 ist eine weitere alternative Ausführungsform der erfindungsgemäßen Vorrichtung gezeigt, bei welcher die Verkleidung 22 und der Himmel 42 nicht mehr integral den Luftführungskanal 24 und den Luftauslasskanal 32 bilden, sondern ein von dem Himmel 42 getrennter Luftführungskanal 24 und Luftauslasskanal 32 vorgesehen sind. Dabei ist eine gewünschte Ausrichtung der genannten Bauteile durch Verbindungsmittel 46 geschaffen. Die in Fig. 6 gezeigte Ausführungsform zeichnet sich weiter dadurch aus, dass ein als Radiallüfter ausgebildeter Lüfter 26 vorgesehen ist, der Luft durch den Lüftführungskanal 24 in den Luftauslasskanal 32 transportiert. Diese wird auf ihrem Weg zu der Luftauslassöffnung 28 mittels Heiz-/Kühlelement 30 auf eine gewünschte Temperatur eingestellt.

In Fig. 7 ist die in Fig. 6 gezeigt Ausführungsform in perspektivischer, teilweise geschnittener Ansicht ohne den Himmel 42 gezeigt. Die nicht näher wiedergegebene Achse des Lüfters 26 steht nunmehr senkrecht auf der von dem Lüftungskanal 24 aufgespannten Ebene und fördert die Luft radial gegen Leitschaufeln 34, von denen zwei dargestellt sind.

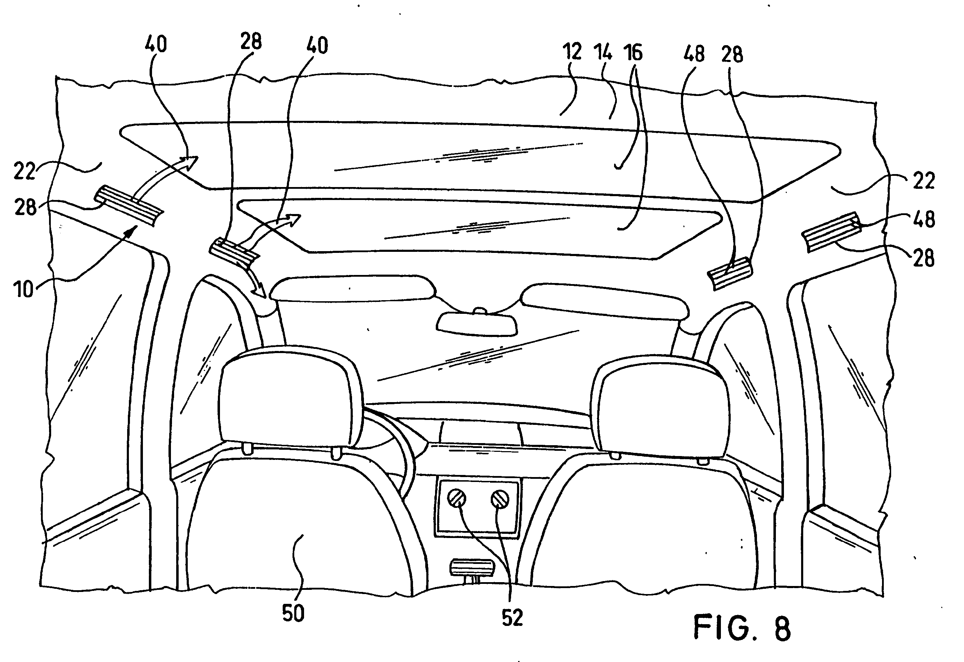

In Fig. 8 ist ein in einem Fahrzeug eingebautes, als Dachmodul 10 ausgebildetes Fahrzeugdach gezeigt. Das Dachteil 14 weist, wie bereits in Fig. 1 beschrieben, zwei voneinander getrennte Glasscheiben 16 auf, die in dem Rahmen 12 angeordnet sind. Die in Fahrtrichtung des Fahrzeugs vorne befindliche Scheibe 16 ist in einem an sich bekannten Schiebe-Hebedach angeordnet, während die im Fondbereich des Fahrzeugs befindliche Scheibe 16 in dem Rahmen 12 nicht bewegbar befestigt ist. Die beiden Verkleidungen 22 weisen jeweils zwei Luftauslassöffnungen 28 auf, von denen sich jeweils eine Luftauslassöffnung 28 im vorderen Bereich bzw. im Fondbereich des Fahrzeugs befindet.

Die Luftauslassöffnungen 28 weisen jeweils eine Anzahl von Lüftungsgittern 48 aus, die in Fahrtrichtung im Wesentlichen horizontal ausgerichtet sind. Diese können nicht bewegbar befestigt oder, einzeln beweglich, in verschiedene Richtung ausrichtbar sein. Wie Fig. 8 entnommen werden kann, sind die Lüftungsgitter 48 im Bereich des Fahrersitzes 50 in verschiedene Richtungen ausgerichtet. Hierdurch ist gesichert, dass ein Teil des aus den Luftauslassöffnungen 28 ausströmenden Luftstroms 40 gegen die vordere Scheibe 16, und ein anderer Teil des Luftstroms 40 in Richtung des Fahrersitzes 50, insbesondere in Richtung des Kopfes eines hier nicht gezeigten Fahrers, gelenkt wird. Die hinter dem Fahrer im Fondbereich befindlichen Luftauslassöffnungen 28 weisen Lüftungsgitter 48 auf, die allesamt derart ausgerichtet sind, daß der Luftstrom 40 allein gegen die hintere Scheibe 16 gelenkt wird.

Aus Fig. 8 geht hervor, dass auf der in Fahrtrichtung links gesehenen Seite (Fahrerseite) Luftströme 40 aus den Luftauslassöffnungen 28 ausströmen, während auf der Beifahrerseite keine Luft aus den Luftauslassöffnungen 28 austritt. Es ist also möglich, für jede Luftauslassöffnung 28 individuell zu bestimmen, ob ein Luftstrom 40 austreten soll oder nicht. Eine solche Steuerung kann manuell, insbesondere über ein Bedienelement 52, oder automatisch, insbesondere mittels einer Sitzerkennung, erfolgen, wie weiter unten beschrieben ist. Mit diesem oder weiteren Bedienelementen 52 können beispielsweise auch der aus den Luftauslassöffnungen 28 austretende Volumenstrom des Luftstroms 40, dessen Temperatur und/oder Feuchtigkeit eingestellt werden. Auch ist eine Ausrichtung der Lüftungsgitter 48 über ein Bedienelement 52, oder manuell an den Lüftungsgittern 48 selbst, möglich.

Auf die zuvor beschriebene Weise kann die klimatisierende Funktion eines Schiebehimmels oder Rollos, auf welche bei der vorliegenden Erfindung bevorzugt verzichtet wird, nachgebildet werden.

Bei dem transparenten Dachteil kann es sich beispielsweise um einen verstellbaren Deckel eines Schiebedaches, eines Schiebehebedaches, eines Spoilerdaches oder eines Mehrdeckeldaches handeln. Weiter kann das Dachteil ein Großdach oder ein Volldach sein, das beweglich oder fest an der Fahrzeugkarosserie abgebracht ist.

In vorteilhafter Weise können die Temperatur, die Luftfeuchtigkeit, der Volumenstrom und/oder die Geschwindigkeit des Luftstroms 40 über eine hier nicht gezeigte Steuer- oder Regeleinrichtung eingestellt werden. Die Einstellung kann manuell oder automatisch in Abhängigkeit der Fahrzeuginnenraumtemperatur und/oder Fahrzeuginnenraumluftfeuchtigkeit, insbesondere in Kopfhöhe des Fahrzeugführers oder - hiervon abhängig oder unabhängig - etwaiger weiterer Fahrzeuginsassen, und/oder der Temperatur und/oder Luftfeuchtigkeit außerhalb des Fahrzeugs erfolgen. Weiter kann die Einstellung des Luftstroms 40 in Abhängigkeit des Betriebszustandes einer im Fahrzeug vorgesehenen Standbelüftungsvorrichtung, einer Standheizung, einer Standkühlvorrichtung, einer Sitzerkennung und/oder einer Sitzheizung automatisch oder manuell vorgesehen sein. Die Einstellung , insbesondere das Ein- und/oder Ausschalten der Steuer- oder Regeleinrichtung, kann ebenfalls über eine Fernwirkeinrichtung, insbesondere ein mobiles Telefon, und/oder zeitabhängig erfolgen.

Die Erfindung ermöglicht eine bessere Anpassung an das Wärme- bzw. Kälteempfinden am Kopf der Fahrzeug-Insassen, als dies bei einem Rollo oder einem Schiebehimmel möglich ist.

### Bezugszeichenliste

- 10: Dachmodul
- 12: Rahmen von 10
- 14: Dachteil
- 16: Deckelscheibe
- 18: Schicht auf 16 mit steuerbarer Transmission
- 20: Fahrzeuginnenraum
- 22: Verkleidung
- 24: Luftführungskanal
- 26: Lüfter
- 28: Luftauslassöffnung
- 30: Heiz-/Kühlelement
- 32: Luftauslasskanal
- 34: Leitschaufeln
- 36: Lüftermotor
- 38: Lüfterrad
- 40: Luftstrom aus 28
- 42: Fahrzeughimmel
- 44: Dachrahmen
- 46: Verbindungsmittel
- 48: Lüftungsgitter
- 50: Fahrersitz
- 52: Bedienelement

## Patentansprüche

1. Fahrzeugdach mit einem Dachteil (14), das eine transparente Scheibe (16) umfasst, mit wenigstens einem seitlich der Scheibe (16) angeordneten Auslass (28) mindestens eines Luftführungskanals (24 bzw. 32), der einen Luftstrom (40) auf die Unterseite der Scheibe (16) leitet, wobei der Luftstrom (40) mittels einer Vorrichtung (30) erwärmbar oder abkühlbar ist, **dadurch gekennzeichnet, dass** der Luftführungskanal (24 bzw. 32) ausschließlich an einem das Dachteil (14) umgebenden Rahmen (12 bzw. 44) oder an einem an diesem Rahmen (12 bzw. 44) befestigten, das Dachteil (14) umgebenden Bauteil (22, 24) ausgebildet ist, wobei in dem Luftführungskanal (24) bzw. in den Luftführungskanälen (24) wenigstens ein elektrischer Lüfter (26) angeordnet ist.

2. Fahrzeugdach nach Anspruch 1, **dadurch gekennzeichnet, dass** als Vorrichtung (30) ein PTC-Heizelement vorgesehen ist.

3. Fahrzeugdach nach Anspruch 1, **dadurch gekennzeichnet, dass** als Vorrichtung (30) ein Peltier-Kühlelement vorgesehen ist.

4. Fahrzeugdach nach Anspruch 1 bis 3, **dadurch gekennzeichnet, dass** der bzw. jeder Luftauslass (28) mit einem PTC-Heizelement (30) und/oder Peltier-Kühlelement (30) versehen ist.

5. Fahrzeugdach nach einem der vorhergehenden Ansprüche, **dadurch gekennzeichnet, dass** der Lüfter (26) als Axiallüfter mit einem Lüfterrad (38) ausgebildet ist, dessen Drehachse in Längsrichtung des Luftführungskanals (24) verläuft.

6. Fahrzeugdach nach einem der Ansprüche 1 bis 4, **dadurch gekennzeichnet, dass** der bzw. jeder Lüfter (26) als Radiallüfter mit einem Lüfterrad (38) ausgebildet ist, dessen Drehachse im Wesentlichen senkrecht auf einer von dem Luftführungskanal (24) aufgespannten Ebene verläuft.

7. Fahrzeugdach nach einem der vorhergehenden Ansprüche, **dadurch gekennzeichnet, dass** die Luft mittels Leitschaufeln (34) aus dem Luftführungskanal (24) zu dem bzw. jedem Auslass (28) geleitet wird.

8. Fahrzeugdach nach einem der vorhergehenden Ansprüche, **dadurch gekennzeichnet, dass** entlang jeder Seite der Scheibe (16) ein Luftführungskanal (24) vorgesehen ist.

9. Fahrzeugdach nach einem der vorhergehenden Ansprüche, **dadurch gekennzeichnet, dass** die Luftführungskanäle (24) als Verkleidungsteile (22) ausgeführt sind, die dachseitig angebracht sind.

10. Fahrzeugdach nach einem der vorhergehenden Ansprüche, **dadurch gekennzeichnet, dass** weiter wenigstens ein Mittel zum Leiten wenigstens eines Teils des Luftstroms (40) in Richtung eines Fahrzeuginsassens vorgesehen ist.

11. Fahrzeugdach nach einem der vorhergehenden Ansprüche, **gekennzeichnet durch** eine Vorrichtung zum Steuern oder Regeln eines Luftstroms (40) mit einer Steuerschaltung, welche die Vorrichtung(en) (30) zum Erwärmen und/oder Kühlen und/oder den bzw. die Lüfter (26) ansteuert.

12. Fahrzeugdach nach Anspruch 11, **dadurch gekennzeichnet, dass** wenigstens ein Mittel zum Ansteuern der Vorrichtungen (30) und/oder der Lüfter (26) in Abhängigkeit von der Fahrzeuginnenraumtemperatur, insbesondere in Kopfhöhe eines Fahrzeugführers oder weiterer Fahrzeuginsassen, und/oder in Abhängigkeit von der Fahrzeuginnenraumluftfeuchtigkeit und/oder in Abhängigkeit von der Temperatur und/oder der Luftfeuchtigkeit außerhalb des Fahrzeugs vorgesehen ist.

13. Fahrzeugdach nach Anspruch 11 oder 12, **dadurch gekennzeichnet, dass** wenigstens ein Mittel zum Ansteuern der Vorrichtungen (30) und/oder der Lüfter (26) in Abhängigkeit vom Betriebszustand einer Standbelüftungsvorrichtung, einer Standheizung, einer Standkühlvorrichtung, einer Sitzerkennung und/oder einer Sitzheizung vorgesehen ist.

14. Fahrzeugdach nach einem der Ansprüche 11 bis 13, **dadurch gekennzeichnet, dass** die Steuerschaltung über eine Fernwirkeinrichtung einstellbar ist.

## Claims

1. Vehicle roof having a roof part (14), which comprises a transparent pane (16), having at least one outlet (28), arranged to the side of the pane (16), of at least one air-guiding channel (24 or 32) which guides an air flow (40) onto the underside of the pane (16), it being possible for the air flow (40) to be heated or cooled by means of an apparatus (30), **characterized in that** the air-guiding channel (24 or 32) is formed exclusively on a frame (12 or 44) which surrounds the roof part (14) or on a component (22, 24) which surrounds the roof part (14) and is fastened to the said frame (12 or 44), at least one electric fan (26) being arranged in the air-guiding channel (24) or in the air-guiding channels (24).

2. Vehicle roof according to Claim 1, **characterized in that** a PTC heating element is provided as apparatus (30).

3. Vehicle roof according to Claim 1, **characterized in that** a Peltier cooling element is provided as apparatus (30).

4. Vehicle roof according to Claims 1 to 3, **characterized in that** the or each air outlet (28) is provided with a PTC heating element (30) and/or Peltier cooling element (30).

5. Vehicle roof according to one of the preceding claims, **characterized in that** the fan (26) is configured as an axial fan having an impeller wheel (38), the rotational axis of which extends in the longitudinal direction of the air-guiding channel (24).

6. Vehicle roof according to one of Claims 1 to 4, **characterized in that** the or each fan (26) is configured as a radial fan having an impeller wheel (38), the rotational axis of which extends substantially perpendicularly on a plane which is defined by the air-guiding channel (24).

7. Vehicle roof according to one of the preceding claims, **characterized in that** the air is guided by means of guide vanes (34) out of the air-guiding channel (24) to the or each outlet (28).

8. Vehicle roof according to one of the preceding claims, **characterized in that** an air-guiding channel (24) is provided along each side of the pane (16).

9. Vehicle roof according to one of the preceding claims, **characterized in that** the air-guiding channels (24) are configured as trim parts (22) which are attached on the roof side.

10. Vehicle roof according to one of the preceding claims, **characterized in that**, furthermore, at least one means is provided for guiding at least part of the air flow (40) in the direction of a vehicle occupant.

11. Vehicle roof according to one of the preceding claims, **characterized by** an apparatus for controlling or regulating an air flow (40) having a control circuit which actuates the apparatus (apparatuses) (30) for heating and/or cooling and/or the fan or fans (26).

12. Vehicle roof according to Claim 11, **characterized in that** at least one means is provided for actuating the apparatuses (30) and/or the fans (26) as a function of the vehicle interior temperature, in particular at the head level of a vehicle driver or further vehicle occupants, and/or as a function of the vehicle interior humidity and/or as a function of the temperature and/or the humidity outside the vehicle.

13. Vehicle roof according to Claim 11 or 12, **characterized in that** at least one means is provided for actuating the apparatuses (30) and/or the fans (26) as a function of the operating state of an auxiliary ventilation apparatus, an auxiliary heating means, an auxiliary cooling apparatus, a seat detection means and/or a seat heating means.

14. Vehicle roof according to one of Claims 11 to 13, **characterized in that** the control circuit can be set via a remote control device.

## Revendications

1. Toit de véhicule doté d'une partie de toit (14) comprenant une vitre (16) transparente pourvue d'au moins une évacuation (28) disposée à côté de la vitre (16) d'au moins un canal de guidage d'air (24 ou 32) qui guide un flux d'air (40) sur le côté inférieur de la vitre (16), le flux d'air (40) pouvant être refroidi ou réchauffé à l'aide d'un dispositif (30), **caractérisé en ce que** le canal de guidage d'air (24 ou 32) est uniquement fixé à un cadre (12 ou 44) entourant la partie de toit (14) ou à un élément (22, 24) fixé à ce cadre (12 ou 44) entourant la partie de toit (14), au moins une aération (26) électrique étant disposée dans le canal de guidage d'air (24) ou dans les canaux de guidage d'air (24).

2. Toit de véhicule selon la revendication 1, **caractérisé en ce que** le dispositif (30) prévu est un élément chauffant de type CTP.

3. Toit de véhicule selon la revendication 1, **caractérisé en ce que** le dispositif (30) prévu est un élément refroidissant de type Peltier.

4. Toit de véhicule selon la revendication 1 à 3, **caractérisé en ce que** la et/ou les évacuations d'air (28) sont pourvues d'un élément chauffant de type CTP (30) et/ou d'un élément refroidissant de type Peltier (30).

5. Toit de véhicule selon l'une quelconque des revendications précédentes, **caractérisé en ce que** l'aération (26) prend la forme d'une aération axiale dotée d'une roue de ventilation (38) dont l'axe de rotation s'étend dans la direction longitudinale du canal de guidage d'air (24).

6. Toit de véhicule selon l'une quelconque des revendications 1 à 4, **caractérisé en ce que** le et/ou les éléments de ventilation (26) prennent la forme d'une aération radiale dotée d'une roue de ventilation (38) dont l'axe de rotation s'étend pour l'essentiel perpendiculairement sur un plan constitué par le canal de guidage d'air (24).

7. Toit de véhicule selon l'une quelconque des revendications précédentes, **caractérisé en ce que** l'air est guidé à l'aide de boucles de guidage (34) allant du canal de guidage d'air (24) au et/ou aux évacuations (28).

8. Toit de véhicule selon l'une quelconque des revendications précédentes, **caractérisé en ce qu'**un canal de guidage d'air (24) est prévu le long de chaque côté de la vitre (16).

9. Toit de véhicule selon l'une quelconque des revendications précédentes, **caractérisé en ce que** les canaux de guidage d'air (24) prennent la forme de pièces revêtues (22) disposées côté toit.

10. Toit de véhicule selon l'une quelconque des revendications précédentes, **caractérisé en ce qu'**en outre au moins un moyen destiné à guider au moins une partie du courant d'air (40) est prévu en direction d'un occupant du véhicule.

11. Toit de véhicule selon l'une quelconque des revendications précédentes, **caractérisé par** un dispositif servant à commander ou à régler un courant d'air (40) à l'aide d'un circuit de commande qui commande le ou les dispositifs (30) de chauffage et/ou de refroidissement et/ou la ou les aérations (26).

12. Toit de véhicule selon la revendication 11, **caractérisé en ce qu'**au moins un moyen de commande des dispositifs (30) et/ou des aérations (26) est prévu en fonction de la température de l'habitacle du véhicule, notamment à la hauteur du visage d'un conducteur ou d'autres passagers et/ou en fonction du taux d'humidité de l'air de l'habitacle et/ou en fonction de la température et/ou du taux d'humidité de l'air observés à l'extérieur du véhicule.

13. Toit de véhicule selon la revendication 11 ou 12, **caractérisé en ce qu'**au moins un moyen de commande des dispositifs (30) et/ou des aérations (26) est prévu en fonction de l'état de fonctionnement d'un dispositif d'aération auxiliaire, d'un chauffage auxiliaire, d'un dispositif de refroidissement auxiliaire, d'un système de reconnaissance de siège et/ou d'un chauffage de siège.

14. Toit de véhicule selon l'une quelconque des revendications 11 à 13, **caractérisé en ce que** le circuit de commande peut être réglé au moyen d'une télécommande.
